# FASCICULE DE BREVET EUROPEEN

(11) **EP 2 105 637 B1**
(45) Date de publication et mention de la délivrance du brevet: **13.04.2011**
(21) Numéro de dépôt: 09305177.9
(22) Date de dépôt: 27.02.2009
(51) Int. Cl.: F16H 61/32

(54) **Actionneur électromécanique pour boîte de vitesses automatique comprenant des moyens de progressivité**
Elektromechanisches Stellglied für Automatikgetriebe, das Abstufungsmittel umfasst
Electromechanical actuator for automatic gearbox comprising progression means

(30) Priorité: 03.03.2008 FR 0851353
(43) Date de publication de la demande: 30.09.2009
(73) Titulaire: Renault s.a.s., 92100 Boulogne-Billancourt (FR)
(72) Inventeur: Raoul, Michel, 78990, Elancourt (FR)

(56) Documents cités:
- EP-A- 0 301 724
- EP-A- 1 318 335
- US-B1- 6 327 927

## Description

La présente invention concerne un actionneur électromécanique, pour boîte de vitesses automatique.

Plus précisément, elle a pour objet un actionneur électromécanique pour boîte de vitesses automatique, comportant un moteur d'actionnement qui commande, par l'intermédiaire d'un étage de réduction de sa vitesse de rotation, le déplacement d'un organe d'actionnement de plusieurs organes internes de la boîte de vitesse, et des moyens de sélection aptes à positionner l'organe d'actionnement dans plusieurs positions de fonctionnement.

Une application particulièrement intéressante de l'invention se trouve dans les boîtes de vitesses automatiques ou automatisées, dans lesquelles les manoeuvres d'un embrayage d'entrée, et les opérations de passage des vitesses, sont réalisés par des actionneurs contrôlés par un calculateur embarqué à bord du véhicule. Sont concernées en particulier, les boîtes de vitesses automatiques ou automatisées, à passages sous couple.

On connaît dans l'état de la technique, des actionneurs électromécaniques pour boîtes de vitesses automatisées tels que connu de EP 1 318 335 et US 6 327 927, divulguent les caractéristiques du préambule de la revendication 1. La publication EP 1 318 335 décrit notamment une boîte de vitesses robotisée à passages sous couple, pourvue d'actionneurs électromécaniques, dont l'un présente un organe d'actionnement sous la forme d'un doigt d'actionnement. Ce doigt commande, par l'intermédiaire de crabots, le déplacement de fourchettes commandant respectivement la manoeuvre de coupleurs coniques de passage de vitesses auto-assistés, et celle d'un embrayage d'entrée.

Les coupleurs coniques auto-assistés, sont ouverts par défaut en position de repos. Pendant la synchronisation des rapports, ils doivent transmettre un effort permanent. Une certaine progressivité de la montée en effort est cependant nécessaire, si bien qu'ils sont pilotés de préférence en effort.

En revanche, le pilotage d'un embrayage d'entrée, qui possède ses propres moyens de progressivité, peut être effectué en position : alors que la mise en action d'un coupleur auto-assisté requiert un ressort intercalé dans la chaîne cinématique de commande pour obtenir une progressivité de l'effort appliqué, la progressivité interne d'une commande d'embrayage n'est en effet pas souhaitée.

Il existe donc un besoin pour bénéficier d'un actionneur électromécanique qui déplace un organe d'actionnement interne de la boîte, selon deux modes de fonctionnement distincts, en rapport avec la fonction confiée à l'actionneur.

L'invention a pour objet un actionneur à deux positions de fonctionnement, dans l'une desquelles, la chaîne cinématique reliant le moteur d'actionnement à l'organe d'actionnement, inclut des moyens de progressivité disposés en amont d'un étage de réduction.

De préférence, la chaîne cinématique reliant le moteur d'actionnement à l'organe d'actionnement, exclut ces moyens de progressivité, dans les autres positions de l'organe d'actionnement.

Selon un mode de réalisation particulier de l'invention, l'étage de réduction est disposé entre un axe d'entrée relié au moteur d'entraînement et portant les moyens de progressivité, et un axe de sortie portant l'organe d'entraînement.

L'invention porte également sur une boîte de vitesses automatique comportant un tel actionneur agencé dans la boîte, de manière à actionner au moins un coupleur de vitesses avec sa progressivité, et un embrayage d'entrée, sans sa progressivité.

D'autres caractéristiques et avantages de l'invention apparaîtront clairement à la lecture de la description suivante d'un mode de réalisation particulier de celle-ci, en se reportant aux dessins annexés, sur lesquels :
- la figure 1 est une vue en coupe verticale de l'actionneur,
- les figures 2, 3 et 4 sont des vues en coupe horizontale de celui-ci,
- les figures 5A et 5B sont deux coupes orthogonales du dispositif vis écrou, d'entrée de mouvement,
- les figures 6A et 6B sont deux vues en coupe du dispositif de compensation de couple, en position de repos et de travail, et
- les figures 7 et 8 montrent la transmission du mouvement avec, et sans, progressivité.

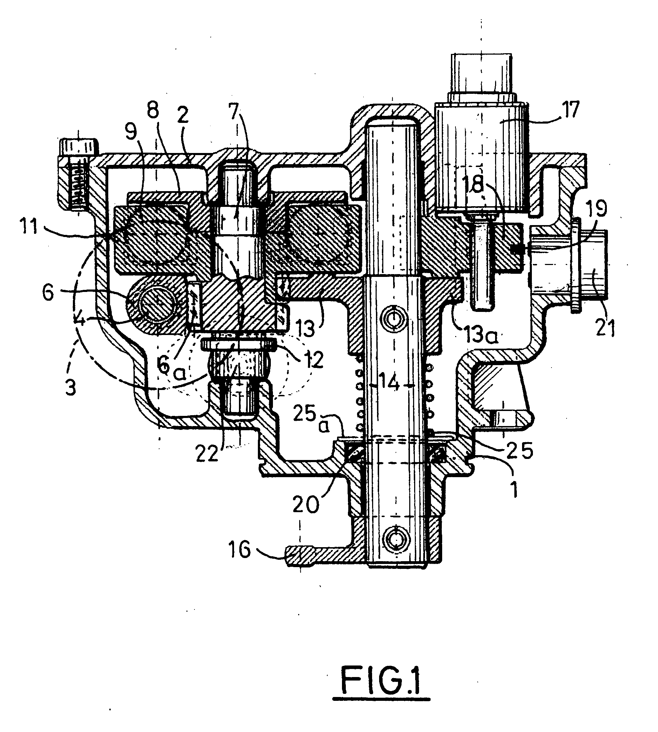

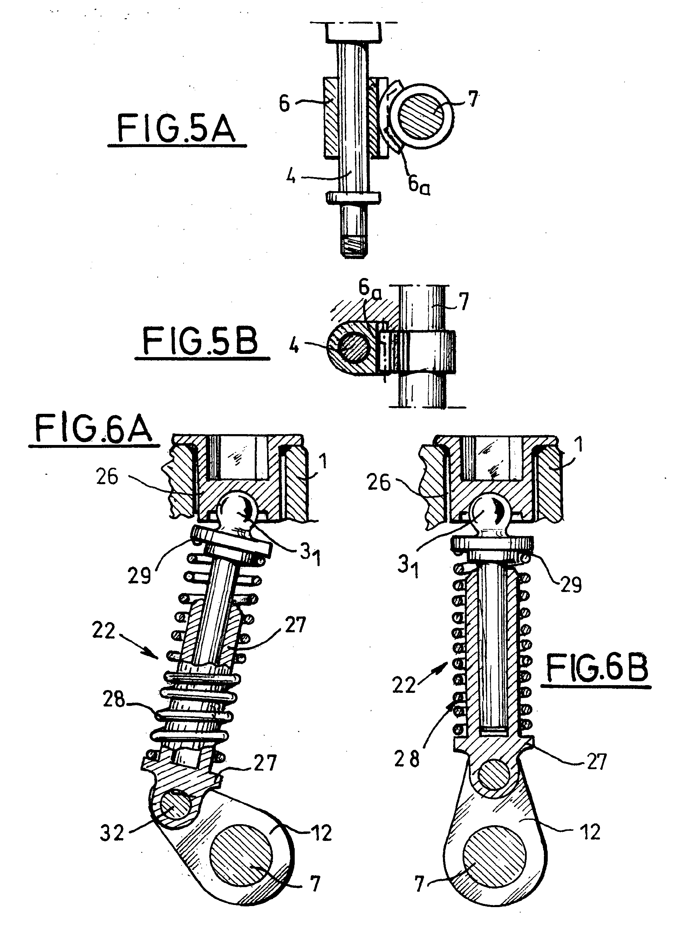

La figure 1 montre les principaux éléments de l'actionneur. Celui-ci est logé dans un carter 1, qui est fermé par un couvercle 2. Un moteur d'actionnement 3 entraîne une vis d'entrée 4, sur laquelle est immobilisée en rotation un écrou crémaillère 6, qui se déplace en translation sur celle-ci. Sa denture 6a sert de crémaillère à la denture 7a de l'axe d'entrée 7, qui est donc entraîné en rotation à partir du moteur 3, par l'intermédiaire de la vis 4, et de l'écrou 6. Ce mécanisme est détaillé sur la figure 5.

L'axe d'entrée 7 porte un flasque d'entrée 8, qui est relié par un ensemble de ressorts de progressivité 9, à un flasque de sortie 11. Il porte également une collerette d'entraînement 12, d'un dispositif de compensation d'effort, décrit plus loin.

Le flasque de sortie 11 engrène avec un secteur d'entraînement 13, de l'axe de sortie (de passage) 14 pour commander des coupleurs ou un embrayage d'entrée selon sa position en hauteur. Cet engrènement permet de réduire la vitesse de rotation, en apportant une multiplication complémentaire du couple. Elle permet au doigt de sortie, d'atteindre un niveau d'effort élevé. L'axe de sortie 14 porte à son extrémité un doigt d'entraînement 16, par exemple d'un crabot de fourchette de commande interne de boîte de vitesses, ou d'un embrayage.

Sur la figure 1, le doigt d'actionnement 16 et l'axe de sortie 14, sont en position haute. Dans cette position, la chaîne cinématique reliant le moteur d'actionnement 3, à l'organe d'actionnement 16, inclut des moyens de progressivité 9, disposés en amont de l'étage de réduction 11, 13.

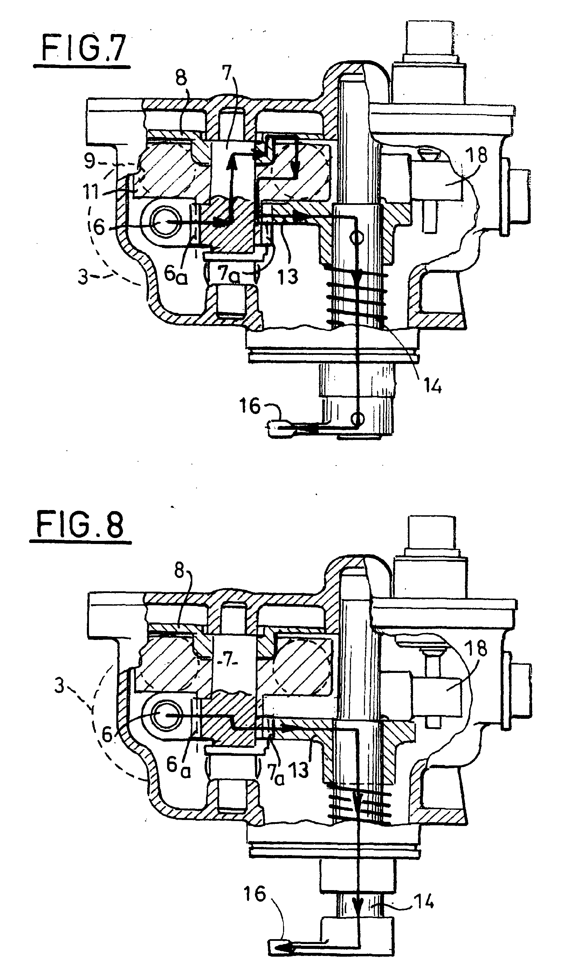

La figure 1 montre par ailleurs un moteur de sélection 17, apte à déplacer l'axe de sortie 14 entre sa position haute (figures 1 et 7), et sa position basse (figure 8). Le moteur 17 est associé à une noix de sélection 18 déplaçant en translation l'axe de sortie 14, entre ses deux positions extrêmes. La noix 18 porte un aimant 19, dont la position est repérée par un capteur de sélection 21, fixé sur le carter 1.

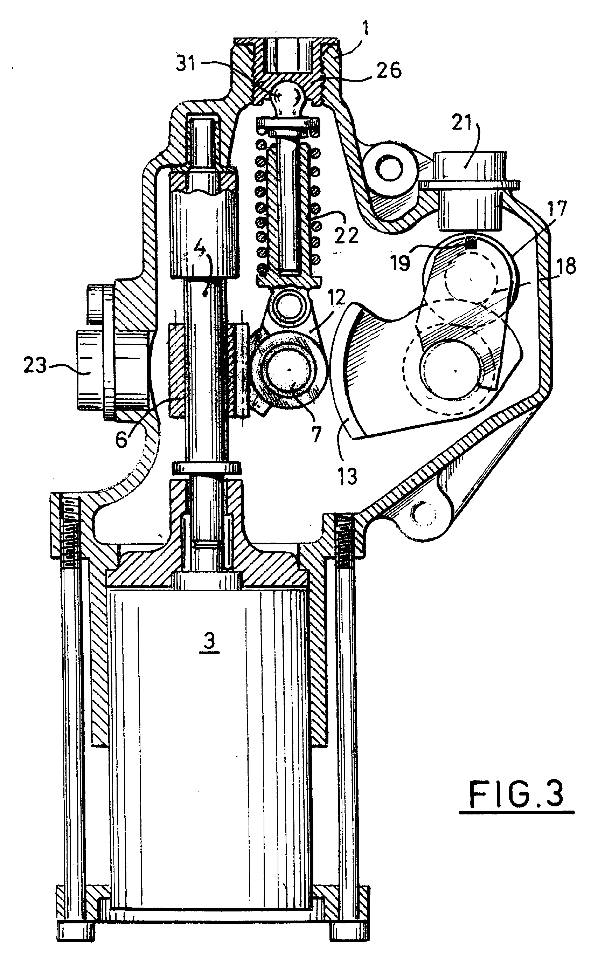

Enfin, la figure 1 montre aussi les éléments suivants : un compensateur 22, (appartenant à un dispositif de compensation d'efforts mieux décrit sur la figure 3), qui est relié à l'axe de sortie 14 par la collerette 12, un ressort de rappel 25 de l'axe 14 vers le haut, qui prend appui à cet effet sur une rondelle 25a, et un joint d'étanchéité 20.

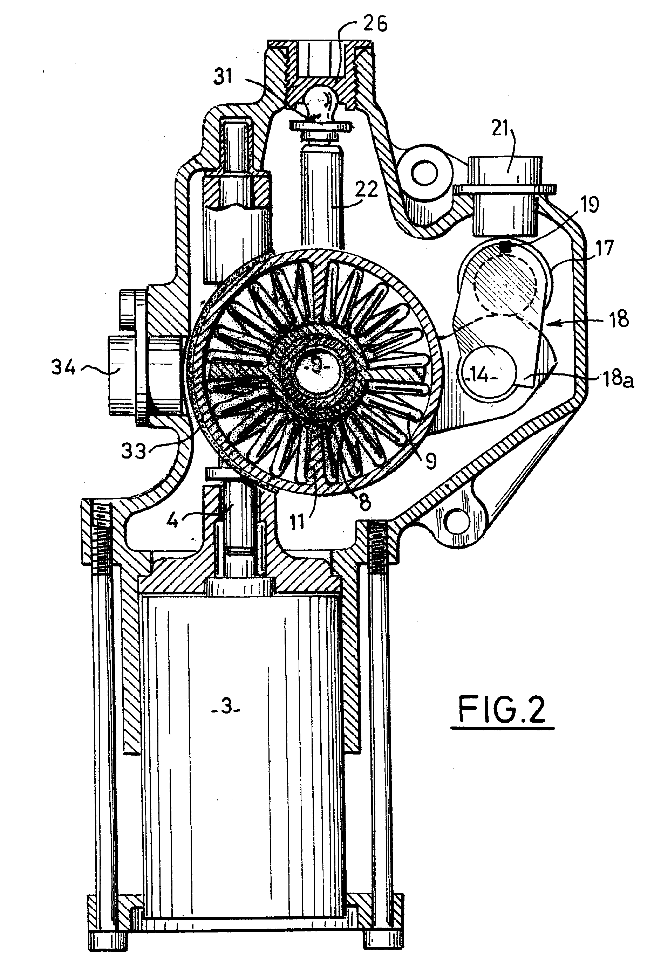

En se reportant à la figure 2, on retrouve les éléments du mécanisme de sélection décrit ci-dessus, ainsi que le moteur d'entraînement 3, la vis 4, l'axe d'entrée 7, le flasque d'entrée 8, les ressorts 9, et le flasque de sortie 11. On voit également une cible 33 sur le flasque de sortie 11, associée à un capteur de rotation 34 du doigt 16, et certains éléments du dispositif de compensation d'efforts, tels que le compensateur 22, et son bouchon de montage et de précharge 26.

La figure 3 est une vue en coupe horizontale de l'actionneur, montrant les éléments internes au repos (ou position neutre), sans les flasques ni les ressorts de progressivité. En revanche, on voit la collerette 12, le secteur d'entraînement denté 13 de l'axe 14, et le compensateur 22.

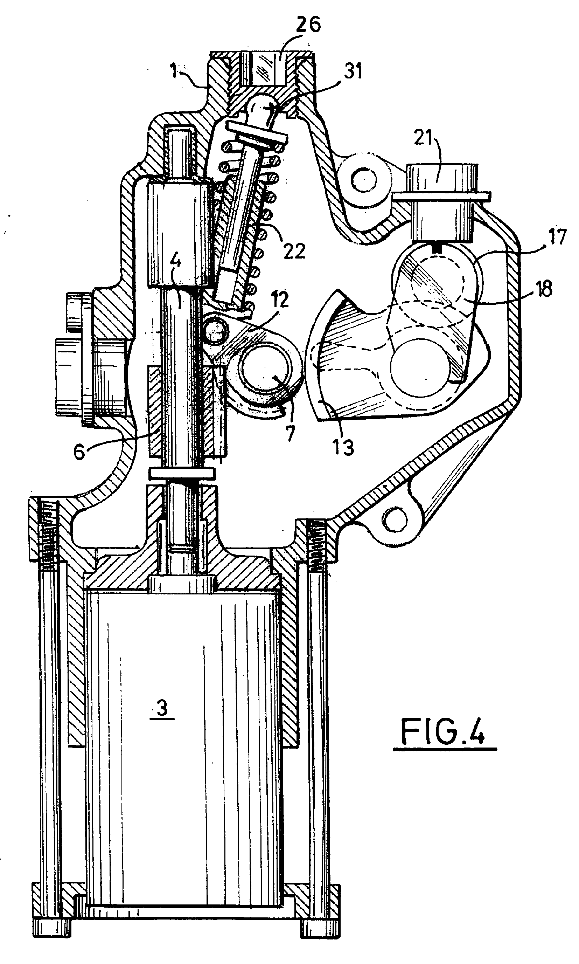

Sur la figure 4, on voit les mêmes éléments que sur la figure 3, mais en en position travail. Le compensateur 22 est en action. Il a pivoté à l'écart de sa position de la figure 2. L'écrou crémaillère 6 est en position inférieure extrême, le long de la vis 4.

L'entrée du mouvement dans l'actionneur à partir du moteur d'actionnement, est expliquée sur la figure 5. Cette figure montre la vis 4, qui reçoit le mouvement du moteur d'actionnement 3, et entraîne l'axe d'entrée 7, par l'intermédiaire de l'écrou crémaillère 6. Comme indiqué plus haut, l'écrou 6, qui est immobilisé en rotation, se déplace le long de la vis 4, en entraînant en rotation l'axe d'entrée 7. Le mouvement rotatif de la vis est ainsi transformé successivement en un déplacement linéaire de l'écrou, puis à nouveau en rotation, pour faire tourner l'axe d'entrée 7.

Le compensateur 22 appartient à un dispositif de compensation d'effort, mis en évidence sur les figures 2, 3, 4, et isolé sur les figures 6A et 6B. Ce dispositif est composé d'un piston 27, d'un ressort 28, et d'un guide 29 portant une rotule 31, qui prend appui sur un « bouchon rotule », 26 vissé dans le carter 1. Le piston 27 est lié à l'axe d'entrée 7 par un axe de compensateur 32 qui lui est parallèle, et qui est fixé sur la collerette 12. Le piston 27 tourne sur la collerette 12 autour de l'axe de compensateur 32, et se déplace le long du guide 29, qui pivote sur le carter.

Le piston 27 transmet la poussée du ressort 28 à l'axe d'entrée 7, de manière variable : la poussée est nulle en position neutre, croissante jusqu'à une certaine rotation, puis décroissante. Il soutient ainsi le moteur d'actionnement 3 pour écarter l'axe de sortie de sa position centrale. Le piston 27 est aligné sur la collerette 12 et sur l'axe d'entrée 7 dans sa position centrale. L'action du dispositif de compensation sur cet axe, est nulle dans cette position.

Le couple (ou l'énergie) fourni par le dispositif de compensation dans le sens de rotation s'écartant du neutre (figure 6B) jusqu'à une certaine valeur angulaire, vient ainsi en soutien au moteur d'actionnement 3. Cette énergie est restituée par le moteur 3 lors du retour au neutre. Le dispositif de compensation de couple (ou d'efforts), fonctionne de manière identique dans les deux directions opposées à l'écart du neutre (figures 3 et 6B), vers les positions de travail (figures 4 et 6A).

En résumé, l'actionneur illustré par les figures, est composé, des principaux sous ensembles suivants :
- un mécanisme de transformation de mouvement à vis et à engrenages,
- un dispositif de compensation de couple,
- un moteur électrique d'actionnement de passage,
- des capteurs de déplacements en sélection et passage, du doigt de sortie,
- un couvercle, qui referme le carter, soutient le mécanisme de transformation de mouvement à vis et à engrenages, et supporte le moteur électrique de sélection.

Le mécanisme de réalisation du mouvement dit « de passage » présente un « niveau d'entrée », un « niveau intermédiaire » de transformation de mouvement, un étage de réduction, et un ensemble de progressivité.

Le « niveau d'entrée » transforme le mouvement de rotation (couple) en mouvement linéaire (poussée axiale). Il est constitué de la vis 4 et de l'écrou 6; cet étage procure une forte démultiplication et surtout un caractère irréversible à la transmission, c'est-à-dire une stabilité dans toutes les positions, sans consommer d'énergie en dehors des phases de changement d'état.

Le niveau intermédiaire de transformation correspond à la transformation du mouvement linéaire de l'écrou 6 avec ses dents latérales 6a formant une crémaillère) à la denture 7a de l'axe d'entrée 7. Ces deux premiers niveaux apportent un taux multiplicateur de couple du moteur d'entrée très élevé (de l'ordre de 10 à 12 fois).

L'ensemble de progressivité est centré sur l'axe d'entrée 7. Il est constitué du premier flasque 8 entraîné par l'axe d'entrée 7, du second flasque 11, et des ressorts courbes 9 intercalés entre les deux flasques 8, 11.

La vitesse du mouvement est réduite entre les axes d'entrée et de sortie par un étage de réduction 11, 13 entre la couronne de sortie 11 de l'axe d'entrée et le secteur denté 13. Cet étage de réduction, entre l'axe d'entrée 7 (relié au moteur d'entraînement 3) et l'axe de sortie 14, est effectif dans les deux modes de fonctionnement décrits.

La sélection des positions de fonctionnement du doigt d'actionnement, est assurée par le mécanisme de sélection, composé :
- du moteur électrique de sélection 17 (avec un axe fileté) porté par le couvercle 2,
- de la noix 18 comportant un trou fileté coopérant avec l'axe du moteur et deux excroissances entourant partiellement l'axe de sortie 14, qui la bloquent en rotation,
- de l'excroissance transversale 13a (du secteur denté 13 porté par l'axe de sortie 14 dans sa partie centrale), sur laquelle la noix 18 applique sa poussée (imposée par son déplacement le long de l'axe fileté du moteur 17), pour déplacer verticalement vers le bas l'axe de sortie 14, et
- du ressort de rappel 25, qui prend appui sur la rondelle 25a, pour repousser vers le haut l'axe de sortie 14, et le maintenir en contact avec la noix 18.

Les déplacements du doigt de sortie 16 en sélection, sont contrôlés par un aimant 19, porté par la noix de sélection 18. L'aimant 19 coopère avec des cellules hall, appartenant au capteur 21 supporté par le carter 1. Dans le cadre de l'invention, on peut notamment prévoir autant de cellules, que de positions de sélection (deux positions, dans le mode de réalisation présenté).

Le contrôle des déplacements angulaires du doigt 16, peut par exemple être assuré par la cible 33 portée par le flasque de sortie 11, et le capteur adéquat 34 supporté par le carter 1. L'implantation de la cible 33 sur le flasque 11, permet de bénéficier de la multiplication du mouvement par la denture de sortie, et d'accroître ainsi le niveau de précision et de résolution du système de contrôle.

La chaîne de transmission d'effort (ou du couple d'entraînement) dans le premier mode, est illustrée sur la figure 7. Le moteur 3 entraîne la vis 6. L'écrou crémaillère 6, qui est immobilisé en rotation, se déplace le long de celle-ci. Il porte une denture qui fait crémaillère sur la denture de axe d'entrée 7. Le flasque d'entrée 8 solidaire de l'axe d'entrée 7 transmet les efforts aux ressorts de progressivité 9, reliant le flasque d'entrée 8 au flasque de sortie 11. La denture de ce dernier attaque une denture liée à l'axe de sortie 14. Celui-ci déplace en rotation le doigt d'entraînement 16.

Avec la progressivité, lorsque le doigt 16 rencontre son obstacle de fin de course bloquant l'axe et le flasque de sortie 11 en rotation, le flasque 8 d'entrée peut continuer sa rotation en comprimant les ressorts 9. A mesure de la compression des ressorts, le couple transmis à l'axe de sortie s'élève progressivement en fonction de la position angulaire relative des ressorts 9.

Sur la figure 8, la transmission du mouvement est réalisée sans les ressorts internes de progressivité. Le doigt d'actionnement 16 est en position basse. La chaîne de transmission d'efforts (ou du couple d'entraînement) est la suivante. Le moteur 3 entraîne toujours la vis 4, qui déplace en translation sur elle-même l'écrou crémaillère 6. La crémaillère 6a fait tourner la denture de axe d'entrée 7, qui coopère cette fois directement avec la denture 7a, portée par l'axe de sortie, entraînant en rotation l'axe de sortie 14, et le doigt d'entraînement 16 fixé sur celui-ci.

Sans progressivité (figure 8), lorsque le doigt rencontre son obstacle de fin de course bloquant l'axe de sortie, le flasque d'entrée, ainsi que le moteur, sont bloqués.

En conclusion, l'actionneur décrit ci-dessus dispose de deux modes de fonctionnement principaux : un mode avec progressivité interne apte à piloter en effort le déplacement d'un organe, et un mode sans progressivité interne, convenant pour un pilotage, ou un asservissement, en position.

L'actionneur peut présenter deux ou un nombre supérieur de positions, dans lesquelles la chaîne cinématique reliant le moteur d'actionnement à l'organe d'actionnement, inclut ou non les moyens de progressivité disposés en amont de l'étage de réduction.

Dans le mode de réalisation non limitatif de l'invention, illustré par les figures, l'actionneur ne présente que deux positions de fonctionnement. La première position convient pour mettre en action un ou plusieurs coupleurs coniques auto-assistés, alors que la deuxième position sera utilisée, par exemple, pour mettre en action un embrayage, tel qu'un embrayage monodisque sec. Le doigt d'entraînement peut ainsi commander des coupleurs de passage de vitesses dans la première position, et un embrayage d'entrée de la boîte de vitesse dans la deuxième. Toutefois, sans sortir du cadre de l'invention, l'actionneur peut disposer d'un nombre plus élevé de positions de fonctionnement, fonction, par exemple, du nombre de coupleurs de la boite.

De manière générale, des coupleurs de passage sont avantageusement commandés au travers de la chaîne cinématique incluant les moyens de progressivité, alors que l'embrayage d'entrée est commandé de préférence, au travers de la chaîne cinématique qui n'inclut pas ces moyens.

## Revendications

1. Actionneur électromécanique pour boîte de vitesses automatique, comportant un moteur d'actionnement (3) qui commande par l'intermédiaire d'un étage de réduction (11, 13) de sa vitesse de rotation le déplacement d'un organe d'actionnement (16) de plusieurs organes internes de la boîte de vitesse, et des moyens de sélection (17, 18) aptes à positionner l'organe d'actionnement (16) dans plusieurs positions de fonctionnement, **caractérisé en ce que**, dans l'une de ces positions, la chaîne cinématique reliant le moteur d'actionnement (3) à l'organe d'actionnement (16) inclut des moyens de progressivité (9) disposés en amont de l'étage de réduction (11, 13), et **en ce que** dans les autres positions de l'organe d'actionnement, la chaîne cinématique reliant le moteur d'actionnement (3) à l'organe d'actionnement (16) n'inclut pas les moyens de progressivité (9).

2. Actionneur électromécanique selon la revendication 1, **caractérisé en ce que** l'étage de réduction (11, 13) est disposé entre un axe d'entrée (7) relié au moteur d'entraînement (3) et portant les moyens de progressivité (9), et un axe de sortie (14) portant l'organe d'entraînement (16).

3. Actionneur électromécanique selon la revendication 2, **caractérisé en ce que** les moyens de progressivité (9) sont constitués par un ensemble de ressorts reliant un flasque d'entrée (8)et un flasque de sortie (11) portés par l'axe d'entrée (7).

4. Actionneur électromécanique selon la a revendication 3, **caractérisé en ce que** l'axe de sortie (16) déplace l'organe d'actionnement (16) entre deux positions, dans les quelles il engrène respectivement avec l'axe d'entrée (7) directement, ou par l'intermédiaire du flasque d'entrée (8), des ressorts de progressivité (9) et du flasque de sortie (11).

5. Actionneur électromécanique selon l'une des revendications 2, 3 ou 4, **caractérisé en ce que** le dispositif de sélection comporte un moteur de sélection (17) dont l'axe fileté coopère avec une noix (18) bloquée en rotation par l'axe de sortie qui repousse axialement l'axe (14) et le doigt d'actionnement (16).

6. Actionneur électromagnétique selon l'une des revendications précédentes, **caractérisé en ce que** le doigt d'entraînement (16) commande un embrayage d'entrée de la boite de vitesse dans une première position, et des coupleurs de passage de vitesses dans ses autres positions.

7. Actionneur électromagnétique selon la revendication 6, **caractérisé en ce que** les coupleurs de passage sont commandés au travers d'une chaîne cinématique incluant les moyens de progressivité (9), et **en ce que** l'embrayage d'entrée est commandé au travers d'une chaîne cinématique qui n'inclut pas ces derniers.

8. Actionneur électromagnétique selon l'une des revendications précédentes, **caractérisé en ce que** les moyens de sélection comprennent un moteur de sélection (17), entraînant en rotation un axe fileté d'entraînement qui coopère avec une noix bloquée (18) en rotation par l'axe de sortie (14), repoussant axialement l'axe (14) et le doigt de sortie (16).

9. Boîte de vitesses automatique **caractérisée en ce qu'**elle comporte un coupleur conforme à l'une des revendications précédentes agencé de manière à actionner au moins un coupleur de vitesses avec progressivité, et un embrayage d'entrée, sans progressivité.

## Claims

1. Electromechanical actuator for automatic gearbox, comprising an actuation motor (3) which controls, by means of a stage (11, 13) for reducing its rotation speed, the movement of an actuation member (16) for actuating several internal members of the gearbox, and selection means (17, 18) capable of positioning the actuation member (16) in several operating positions, **characterized in that**, in one of these positions, the kinematic chain connecting the actuation motor (3) to the actuation member (16) includes progressiveness means (9) placed upstream of the reduction stage (11, 13), and **in that**, in the other positions of the actuation member, the kinematic chain connecting the actuation motor (3) to the actuation member (16) does not include the progressiveness means (9).

2. Electromechanical actuator according to Claim 1, **characterized in that** the reduction stage (11, 13) is placed between an input shaft (7) connected to the drive motor (3) and supporting the progressiveness means (9), and an output shaft (14) supporting the drive member (16).

3. Electromechanical actuator according to Claim 2, **characterized in that** the progressiveness means (9) consist of a set of springs connecting an input end plate (8) and an output end plate (11) supported by the input shaft (7).

4. Electromechanical actuator according to Claim 3, **characterized in that** the output shaft (14) moves the actuation member (16) between two positions, in which it meshes respectively with the input shaft (7) directly, or by means of the input end plate (8) of the progressiveness springs (9) and of the output end plate (11).

5. Electromechanical actuator according to one of Claims 2, 3 or 4, **characterized in that** the selection device comprises a selection motor (17) of which the threaded shaft interacts with a wharve (18) prevented from rotating by the output shaft which axially pushes back the shaft (14) and the actuation finger (16).

6. Electromagnetic actuator according to one of the preceding claims, **characterized in that** the drive finger (16) controls an input clutch of the gearbox in a first position, and gear-change couplers in its other positions.

7. Electromagnetic actuator according to Claim 6, **characterized in that** the gearchange couplers are controlled through a kinematic chain including the progressiveness means (9), and **in that** the input clutch is controlled through a kinematic chain which does not include the latter.

8. Electromagnetic actuator according to one of the preceding claims, **characterized in that** the selection means comprise a selection motor (17) rotating a threaded driveshaft which interacts with a wharve (18) prevented from rotating by the output shaft (14), axially pushing back the shaft (14) and the output finger (16).

9. Automatic gearbox, **characterized in that** it comprises a coupler according to one of the preceding claims, arranged so as to actuate at least one gearchange coupler with progressiveness, and an input clutch, without progressiveness.

## Patentansprüche

1. Elektromechanischer Stellantrieb für ein Automatikgetriebe, der einen Betätigungsmotor (3), der mittels einer Untersetzungsstufe (11, 13) seiner Drehgeschwindigkeit die Verschiebung eines Betätigungsorgans (16) mehrerer innerer Organe des Getriebes steuert, und Auswahleinrichtungen (17, 18) aufweist, die das Betätigungsorgan (16) in mehreren Betriebsstellungen positionieren können, **dadurch gekennzeichnet, dass** in einer dieser Stellungen die den Betätigungsmotor (3) mit dem Betätigungsorgan (16) verbindende kinematische Kette Progressivitätseinrichtungen (9) enthält, die vor der Untersetzungsstufe (11, 13) angeordnet sind, und dass in den anderen Stellungen des Betätigungsorgans die den Betätigungsmotor (3) mit dem Betätigungsorgan (16) verbindende kinematische Kette die Progressivitätseinrichtungen (9) nicht enthält.

2. Elektromechanischer Stellantrieb nach Anspruch 1, **dadurch gekennzeichnet, dass** die Untersetzungsstufe (11, 13) zwischen einer Eingangsachse (7), die mit dem Antriebsmotor (3) verbunden ist und Progressivitätseinrichtungen (9) trägt, und einer Ausgangsachse (14) angeordnet ist, die das Antriebsorgan (16) trägt.

3. Elektromechanischer Stellantrieb nach Anspruch 2, **dadurch gekennzeichnet, dass** die Progressivitätseinrichtungen (9) aus einer Gruppe von Federn bestehen, die einen Eingangsflansch (8) und einen Ausgangsflansch (11) verbinden, die von der Eingangsachse (7) getragen werden.

4. Elektromechanischer Stellantrieb nach Anspruch 3, **dadurch gekennzeichnet, dass** die Ausgangsachse (14) das Betätigungsorgan (16) zwischen zwei Stellungen verschiebt, in denen es in die Eingangsachse (7) direkt bzw. über den Eingangsflansch (8), die Progressivitätsfedern (9) und den Ausgangsflansch (11) eingreift.

5. Elektromechanischer Stellantrieb nach einem der Ansprüche 2, 3 oder 4, **dadurch gekennzeichnet, dass** die Auswahlvorrichtung einen Auswahlmotor (17) aufweist, dessen Gewindeachse mit einer von der Ausgangsachse drehverriegelten Muffe (18) zusammenwirkt, die die Achse (14) und den Betätigungsfinger (16) axial zurückdrückt.

6. Elektromagnetischer Stellantrieb nach einem der vorhergehenden Ansprüche, **dadurch gekennzeichnet, dass** der Antriebsfinger (16) in einer ersten Stellung eine Eingangskupplung des Getriebes und in seinen anderen Stellungen Gangschaltungskuppler steuert.

7. Elektromagnetischer Stellantrieb nach Anspruch 6, **dadurch gekennzeichnet, dass** die Schaltkuppler über eine kinematische Kette gesteuert werden, die die Progressivitätseinrichtungen (9) enthält, und dass die Eingangskupplung über eine kinematische Kette gesteuert wird, die diese letzteren nicht enthält.

8. Elektromagnetischer Stellantrieb nach einem der vorhergehenden Ansprüche, **dadurch gekennzeichnet, dass** die Auswahleinrichtungen einen Auswahlmotor (17) enthalten, der eine Antriebs-Gewindeachse in Drehung versetzt, die mit einer von der Ausgangsachse (14) drehverriegelten Muffe (18) zusammenwirkt, die die Achse (14) und den Ausgangsfinger (16) axial zurückdrückt.

9. Automatikgetriebe, **dadurch gekennzeichnet, dass** es einen Kuppler nach einem der vorhergehenden Ansprüche aufweist, der so angeordnet ist, dass er mindestens einen Gangkuppler mit Progressivität und eine Eingangskupplung ohne Progressivität betätigt.
